# EUROPÄISCHE PATENTSCHRIFT

(11) **EP 0 694 689 B1**
(45) Veröffentlichungstag und Bekanntmachung des Hinweises auf die Patenterteilung: **13.05.1998**
(21) Anmeldenummer: 95111910.6
(22) Anmeldetag: 27.07.1995
(51) Int. Cl.: F02M 23/08

(54) **Vorrichtung zur Zuführung von Zusatzluft mit Schliessventil**
Device for supplying extra air with non-return valve
Dispositif pour l'admission de l'air supplémentaire avec soupape de retenue

(30) Priorität: 27.07.1994 DE 4426746
(43) Veröffentlichungstag der Anmeldung: 31.01.1996
(73) Patentinhaber: Pommer, Fredi Alexander, 42857 Remscheid (DE)
(72) Erfinder: Pommer, Fredi Alexander, 42857 Remscheid (DE)
(74) Vertreter: Patentanwälte Hauck, Graalfs, Wehnert, Döring, Siemons

(56) Entgegenhaltungen:
- DE-A- 3 317 224
- DE-A- 4 239 069
- US-A- 3 799 132
- US-A- 4 036 014

## Beschreibung

Die vorliegende Erfindung betrifft eine Vorrichtung zur Zuführung von Zusatzluft in dem gemeinsamen Ansaugkanal von mindestens zwei Zylindern eine Brennkraftmaschine mit den Merkmalen des Oberbegriffs des Patentanspruchs 1.

Aus der DE-A-42 39 069 ist eine Vorrichtung dieser Art bekannt. Bei dieser bekannten Vorrichtung wird der Durchsatzregler für die Zusatzluftzuführung mittels Unterdruck gesteuert, der vom Ansaugstutzen im Bereich der Drosselklappe abgegriffen wird. Die Vorrichtung besitzt diverse manuelle Regelungsmöglichkeiten, mit denen gute Anpassungsmöglichkeiten an verschiedenartige Typen von Brennkraftmaschinen mit jeweils guter Dosierungsmöglichkeit der Zusatzluftmenge und guter Verteilung derselben im Ansaugkanal erreichbar sind. So sind insgesamt drei manuell einstellbare Regelelemente vorgesehen, mit denen die Vorrichtung in bezug auf die Unterdruckbeaufschlagung des Durchsatzreglers und des Frühverstellsystems des Zündverteilers manuell einstellbar und damit an beliebige Typen von Brennkraftmaschinen anpaßbar ist. Die Festlegung und Begrenzung der eingeführten Zusatzluftmenge erfolgt durch den speziell ausgebildeten Durchsatzregler, wobei ein verstellbares Anschlagelement entsprechend der jeweiligen Brennkraftmaschine eingestellt wird, um die Zusatzluftmenge für den jeweiligen Motor festzulegen. Im einzelnen bewirkt dabei das Anschlagelement eine Begrenzung der Bewegung des Steuerelementes des Reglers, so daß hierdurch der maximale Durchtrittsquerschnitt für die Zusatzluft festgelegt wird. Der ferner vorgesehene Unterdruckregler regelt die Unterdruckhöhe für den Durchsatzregler, wodurch das Ansteuern und Aussteuern des Durchsatzreglers beeinflußbar ist. Schließlich regelt ein zweiter Unterdruckregler den Unterdruck für das Frühverstellsystem des Zündverteilers.

Es hat sich in der Praxis gezeigt, daß durch diese Anordnung von drei Regelelementen eine gute Einstellmöglichkeit der zugeführten Zusatzluftmenge in Anpassung an verschiedenartige Brennkraftmaschinen erreichbar ist.

Da bei der bekannten Vorrichtung jedoch mehrere Düsenrohre in den gemeinsamen Ansaugkanal von mehreren Zylindern der Brennkraftmaschine münden, ergeben sich infolge der unterschiedlichen Zünd olge der Zylinder unterschiedliche Druckverhältnisse im Ansaugkanal (Saugrohr), d. h. das Druckstadium der einen Saugrohrhälfte kann sich auf das Saugstadium in der anderen Saugrohrhälfte auswirken und umgekehrt. Mit anderen Worten, es können Fälle auftreten, bei denen während des Saughubes im Ansaugkanal zumindest vorübergehend Druckverhältnisse herrschen, die eine Einführung von Zusatzluft unmöglich machen bzw. ein Zurückströmen von Gemisch und ein Eindringen desselben in die Zusatzluftzuführleitung bewirken.

Aus der DE-A-33 17 224 ist eine CO-Reduzierdüse für Verbrennungsmotoren bekannt, bei der eine einzige Düse am Ansaugkanal eines Verbrennungsmotors angeordnet ist. In der Düse befindet sich ein Rückschlagventil, das bei Beschleunigung oder hoher Geschwindigkeit die Zusatzluftzufuhr sperrt, während es ein Einströmen von Zusatzluft während des Leerlaufes sowie beim Schubbetrieb ermöglicht.

Der Erfindung liegt die Aufgabe zugrunde, eine Vorrichtung der angegebenen Art zu schaffen, die hinsichtlich der Optimierung der Zusatzluftzufuhr in Anpassung an verschiedene Betriebsphasen der Brennkraftmaschine sowie in Anpassung an unterschiedliche Brennkraftmaschinen weiter verbessert ist.

Diese Aufgabe wird erfindungsgemäß bei einer Vorrichtung der angegebenen Art durch die kennzeichnenden Merkmale des Patentanspruches 1 gelöst.

Das erfindungsgemäß im Düsenrohr angeordnete Rückschlagventil sperrt den Düsenrohrquerschnitt zumindest teilweise in einer Richtung von der Brennkraftmaschine weg. Herrscht somit Überdruck auf der Ansaugkanal seite, wirkt das Rückschlagventil als Schließventil und verhindert zumindest teilweise das Eindringen von Gemisch über das Düsenrohr in die Zusatzluftzuführleitung. Nach Druckausgleich kann die dann erneut zugeführte Zusatzluft den Ventilkörper vom Ventilsitz abheben, so daß auf die gewünschte Weise Zusatzluft in den Ansaugkanal eingeführt werden kann. Wesentlich ist, daß das Rückschlagventil genau so tariert ist, daß für den unterschiedlichen Typ Brennkraftmaschine eine einwandfreie Freigabe des Düsenrohrquerschnittes durch das Rückschlagventil erreicht wird. So kann beispielsweise der Ventilkörper bei Viertaktmotoren im wesentlichen am Ventilsitz anliegen, weil die während des Saughubes auftretende Saugkraft ausreichend groß ist, um den Ventilkörper gegen die Federspannung vom Ventilsitz abzuheben. Bei Brennkraftmaschinen, die eine derart hohe Saugkraft nicht entwickeln, sieht die Erfindung vor, daß der Ventilkörper nicht ganz am Ventilsitz anliegt, so daß hierbei permanent ein Spalt verbleibt. Auf diese Weise kann der Ventilkörper leichter aus dem Bereich des Ventilsitzes entfernt werden und den Durchlaßquerschnitt des Düsenrohres freigeben. Bei dieser Ausführungsform ist daher das Rückschlagventil so tariert, daß der Ventilkörper bei vollständig entspannter Feder nicht am Ventilsitz anliegt, sondern daß zwischen Ventilkörper und Ventilsitz ein Spalt verbleibt, je nach Art der Brennkraftmaschine.

Zur Ermittlung der genauen Lage des Ventilkörpers des Rückschlagventiles in bezug auf den Ventilsitz kann empirisch so vorgegangen werden, daß der Abstand zwischen Ventilkörper und Ventilsitz in Abhängigkeit von stabilen Leerlaufbedingungen und den gewünschten Abgaswerten eingestellt wird. So läßt man beispielsweise die Brennkraftmaschine im Leerlauf bzw. unteren Teillastbereich laufen und variiert den Abstand zwischen Ventilkörper und Ventilsitz, bis bei noch stabilem Leerlauf die gewünschten Abgaswerte erhalten werden. Die Erfindung sieht vor, daß der entsprechende Abgaswert von Brennkraftmaschine zu Brennkraftmaschine individuell eingestellt werden kann. Sie beinhaltet jedoch auch eine Fixierung dieses Abstandswertes, der dann serienmäßig durch Ausgleichsscheiben oder durch eine feste Dimensionierung für den jeweiligen Motortyp festgelegt wird.

Um eine individuelle Einstellmöglichkeit des Abstandes zwischen dem Ventilkörper des Rückschlagventiles und dem Ventilsitz zu ermöglichen, sieht die Erfindung bei einer speziellen Ausführungsform vor, daß der Ventilsitz in Axialrichtung des Düsenrohres verstellbar ist. Wenn die Feder des Ventilkörpers bei Anlage desselben am Ventilsitz vollständig entspannt ist, kann hierbei durch Verstellen des Ventilsitzes in einer Richtung von der Feder weg ein entsprechender Spalt zwischen Ventilkörper und Ventilsitz eingestellt werden, der das Öffnen des Rückschlagventils beim Ansaugen unterstützt. Vorzugsweise ist dabei der Ventilsitz in das Düsenrohr eingeschraubt, so daß durch Herausschrauben des Ventilsitzes der entsprechende Spalt vergrößert bzw. durch Hereinschrauben verkleinert werden kann. Bei der individuellen Einstellung des Spaltes in bezug auf die jeweilige Brennkraftmaschine wird dabei so vorgegangen, daß im Leerlaufbetrieb der Maschine bei Anlage des Ventilkörpers am Ventilsitz der Ventilsitz so weit aus dem Düsenrohr herausgeschraubt wird, bis bei noch stabilem Leerlauf die gewünschten Abgaswerte erzielt werden.

Es versteht sich, daß die erfindungsgemäß ausgebildete Vorrichtung zur Zuführung von Zusatzluft in den Ansaugkanal einer Brennkraftmaschine sämtliche Merkmale aufweisen kann, wie sie in der vorstehend genannten DE-A-42 39 069 beschrieben sind. Entsprechendes trifft auf die in der DE-C-39 18 366 beschriebenen Merkmale zu.

Bei dem vorstehend beschriebenen Stand der Technik wird der Durchsatzregler durch den vom Ansaugstutzen abgegriffenen Unterdruck gesteuert. Eine weitere Alternative der Erfindung, die sich insbesondere in Kombination mit der Anordnung des vorstehend beschriebenen Rückschlagventils als vorteilhaft erwiesen hat, sieht vor, daß der Durchsatzregler mechanisch durch die Drosselklappe gesteuert wird. Mit anderen Worten, hierbei erfolgt über das Gaspedal, das Gasgestänge, die Drosselklappe mit Drosselklappenhebel und eine entsprechende mechanische Verbindung zum Ventilkörper (Kolben) des Durchsatzreglers eine direkte Betätigung des Reglers in Abhängigkeit von der Bewegung der Drosselklappe. Wenn der Regler ein entsprechendes Anschlagelement besitzt, wie in der vorstehend genannten DE-A-42 39 069 beschrieben, erstreckt sich das Betätigungsorgan (Gestänge, Seilzug, Zugfeder) für den Reglerkolben vorzugsweise durch das als Einstellhülse ausgebildete Anschlagelement. Eine gesonderte Steuerkammer ist hierbei im Regler nicht erforderlich.

Die Erfindung wird nachfolgend anhand von Ausführungsbeispielen in Verbindung mit der Zeichnung im einzelnen erläutert. Es zeigen:
- Figur 1:: eine Schemadarstellung der erfindungsgemäß ausgebildeten Vorrichtung zur Zuführung von Zusatzluft in das Saugrohr eines Viertaktmotors, wobei zwei nebeneinanderliegende Zylinder schematisch dargestellt sind;
- Figur 2: eine Schemadarstellung ähnlich Figur 1 mit angedeuteter mechanischer Steuerung des Durchsatzreglers;
- Figur 3: einen Längsschnitt durch ein Düsenrohr, das mit einer ersten Ausführungsform eines Rückschlagventils versehen ist;
- Figur 4: einen Teillängsschnitt durch ein Düsenrohr, das eine zweite Ausführungsform eines Rückschlagventils aufweist;
- Figur 5: einen Teillängsschnitt durch ein Düsenrohr, das mit einer dritten Ausführungsform eines Rückschlagventils versehen ist; und
- Figur 6: eine genauere schematische Darstellung der mechanischen Steuerung des Durchsatzreglers gemäß Figur 2.

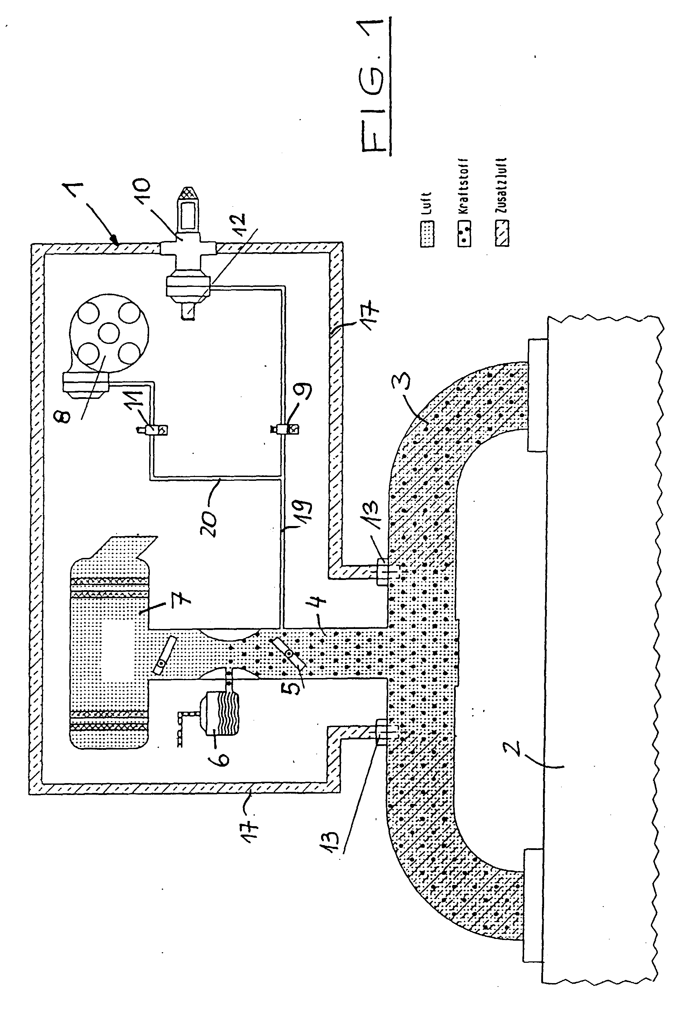

Figur 1 zeigt in schematischer Darstellung eine Vorrichtung 1 zur Zuführung von Zusatzluft in den Ansaugkanal einer Brennkraftmaschine im eingebauten Zustand. Von der Brennkraftmaschine 2 ist hier schematisch ein Motorblock mit zwei Zylindern dargestellt, die ein gemeinsames Saugrohr 3 (Ansaugkanal) aufweisen, das in einen zu einem Vergaser 6 und Luftfilter 7 führenden gemeinsamen Ansaugstutzen 4 mündet. Im Ansaugstutzen befindet sich eine Drosselklappe 5. Im Betrieb saugt die Brennkraftmaschine 2 über das Luftfilter 7 Luft der Atmosphäre und im Vergaser 6 vergasten Kraftstoff an, wobei im Ansaugstutzen 4 ein zündfähiges Kraftstoff-Luft-Gemisch gebildet wird.

Die Vorrichtung zur Zuführung von Zusatzluft weist zwei Düsenrohre 13 auf, die beidseitig des Ansaugstutzens 4 in das Saugrohr 3 münden. Von diesen Düsenrohren sind in Figur 1 nur die Verschraubungen am Saugrohr dargestellt. Beide Düsenrohre 13 sind je an eine Zusatzluftzuführleitung 17 angeschlossen, welche in einen Durchsatzregler 10 münden. Der Durchsatzregler regelt die den Düsenrohren 13 zugeführte Luftmenge, die über ein am Durchsatzregler 10 angeordnetes Luftfilter 30 angesaugt und über die Düsenrohre 13 in das Saugrohr eingeführt wird, um das in diesem befindliche Kraftstoff-Luft-Gemisch abzumagern.

Die Steuerung des Durchsatzreglers 10 (Luftmengenregler) erfolgt bei dieser Ausführungsform mittels Unterdruck, der über eine Unterdruckleitung 19 vom Ansaugstutzen 4 im Bereich der Drosselklappe abgegriffen wird. Diese Unterdruckleitung 19 führt über einen ersten Unterdruckregler 9 zum Durchsatzregler 10, und zwar in eine Steuerkammer desselben. Mit diesem Unterdruck wird eine in der Steuerkammer des Durchsatzreglers 10 befindliche Membran beaufschlagt, die mit einem Steuerkolben verbunden ist, der den Strömungsquerschnitt der Zusatzluftzuführleitungen 17 erweitert oder verkleinert.

Von der Unterdruckleitung 19 zweigt eine Unterdruckleitung 20 zum Frühverstellsystem eines Zündverteilers 8 ab. Innerhalb der Unterdruckleitung 20 befindet sich ein zweiter Unterdruckregler 11, mit dem der dem Frühverstellsystem zugeführte Unterdruck einstellbar ist, um den Zündzeitpunkt auf das spezielle zu verbrennende Magergemisch anzupassen. Der Durchlaßregler 10 weist ein verstellbares Anschlagelement 12 in der Form einer Stellschraube auf, mit dem die Auslenkung der Membran begrenzt wird, um eine bestimmte maximale, den Düsenrohren zugeführte Zusatzluftmenge festzulegen. Der Unterdruckregler 9 regelt in bekannter Weise die Unterdruckhöhe für den Durchsatzregler 10. Es sind daher insgesamt drei manuell einstellbare Regelelemente 9, 11 und 12 vorgesehen, mit denen die Vorrichtung in bezug auf die Unterdruckbeaufschlagung des Durchsatzreglers 10 und des Frühverstellsystems des Zündverteilers manuell einstellbar und damit an beliebige Typen von Brennkraftmaschinen anpaßbar ist.

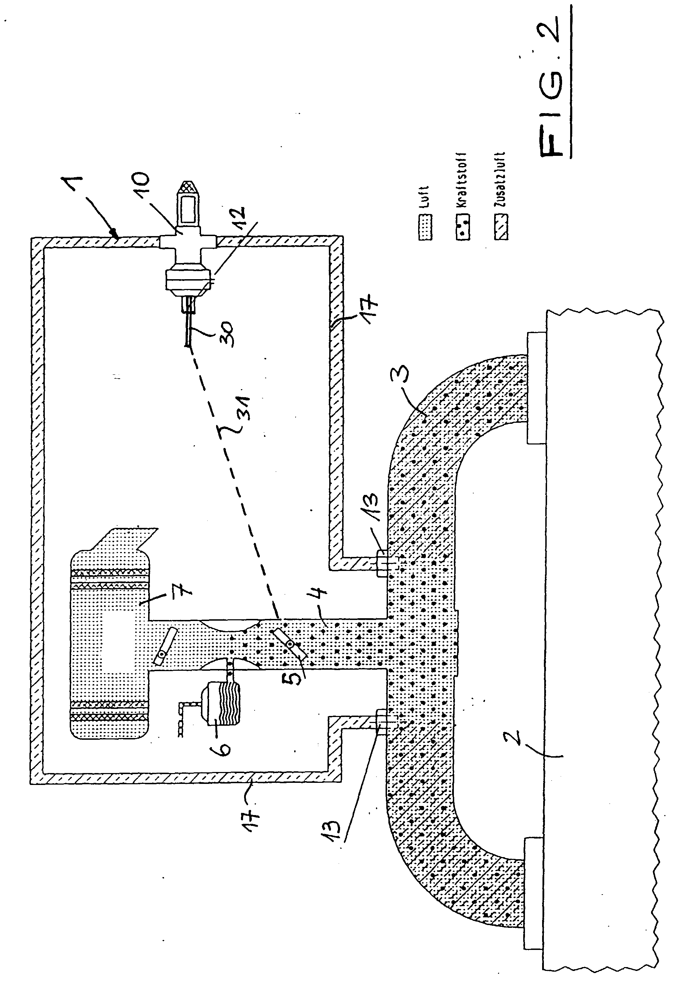

Figur 2 zeigt eine entsprechende Schemadarstellung wie Figur 1, wobei jedoch bei der in Figur 2 gezeigten Ausführungsform der Durchsatzregler 10 mechanisch über die Drosselklappe 5 gesteuert wird. Hierbei weist der Durchsatzregler keine spezielle Steuerkammer auf, sondern ein stangenförmiges Element 30 steht direkt mit dem Kolben des Durchsatzreglers in Verbindung. Dieses stangenförmige Element 30 erstreckt sich durch das Anschlagelement 12. Das stangenförmige Element ist über ein nur schematisch bei 31 gezeigtes geeignetes Gestänge, eine Zugfeder, einen Seilzug etc. mit dem Drosselklappenhebel verbunden, der über das Gasgestänge (nicht gezeigt) vom Gaspedal betätigt wird. Bei dieser Ausführungsform wird daher die Zusatzluftzufuhr zu den beiden Düsenrohren 13 direkt in Abhängigkeit von der Stellung der Drosselklappe gesteuert.

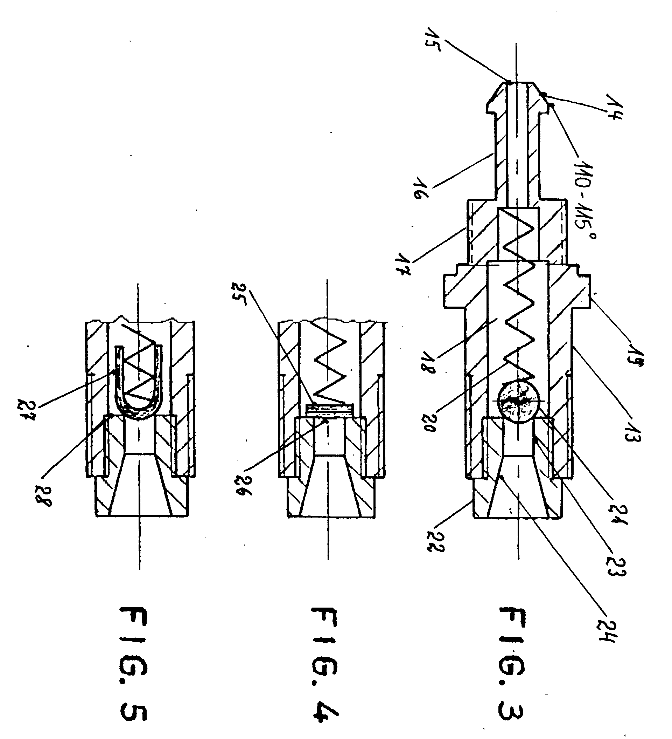

Die Figuren 3 bis 5 zeigen den genauen Aufbau der in den Figuren 1 und 2 nur schematisch dargestellten Düsenrohre 13. Die Düsenrohre sind so angeordnet, daß sie sich bis etwa in die Mitte des Saugrohres 3 erstrecken, wodurch eine optimale Einspeisung und Vermischung der Zusatzluft sichergestellt wird. Die Luftaustrittsöffnung 15 befindet sich an der Spitze des Düsenrohres, wobei diese Spitze in Form einer kegelstumpfartigen Krone 14 ausgebildet ist. Der entsprechende Kegelspitzenwinkel liegt dabei zwischen 110 und 115°. Hinter der Krone 14 verengt sich das Düsenrohr, um sich dann wieder für eine Befestigung an der Wandung des Saugrohres (Flansch 19) zu erweitern. Der Durchflußquerschnitt des Düsenrohres ist abgestuft und verengt sich in Richtung zur Spitze, so daß sich eine Geschwindigkeitserhöhung der Zusatzluft beim Einströmen in das Saugrohr und somit eine entsprechende Düsenwirkung ergibt. Dabei erfolgt eine Verengung von einem breiten Hauptabschnitt 18 zu einem mittelbreiten Abschnitt 17 und von dort zu einem schmalen Abschnitt 16, der sich bis zu Spitze 15 erstreckt.

In das hintere Ende des Düsenrohres 13 ist ein Hülsenelement 22 eingeschraubt, dessen vordere Stirnfläche einen Ventilsitz 23 bildet. Im rückwärtigen Teil erweitert sich der Innenquerschnitt des Hülsenrohres konisch, wie bei 24 gezeigt. Mit dem Ventilsitz 23 wirkt ein Ventilkörper in der Form einer Kugel 21 zusammen, der durch Anlage an den Innenrand des Ventilsitzes 23 den Durchflußquerschnitt des Düsenrohres sperrt. Die Kugel 21 ist durch eine Feder 20 beaufschlagt, die sich an der zwischen den Kanalabschnitten 16 und 17 gebildeten Stufe abstützt. Im vollständig entspannten Zustand der Feder 20 liegt die Kugel 21 am Ventilsitz 23 an. In Figur 3 ist eine Stellung gezeigt, bei der zwischen der Kugel und dem Ventilsitz ein geringfügiger Ringspalt vorhanden ist. Dieser Ringspalt entsteht dadurch, daß das Hülsenelement 22 etwas zurückgeschraubt wurde. Wie eingangs erwähnt, ist dieser Spalt erforderlich, um das Öffnen des Ventils zu unterstützen.

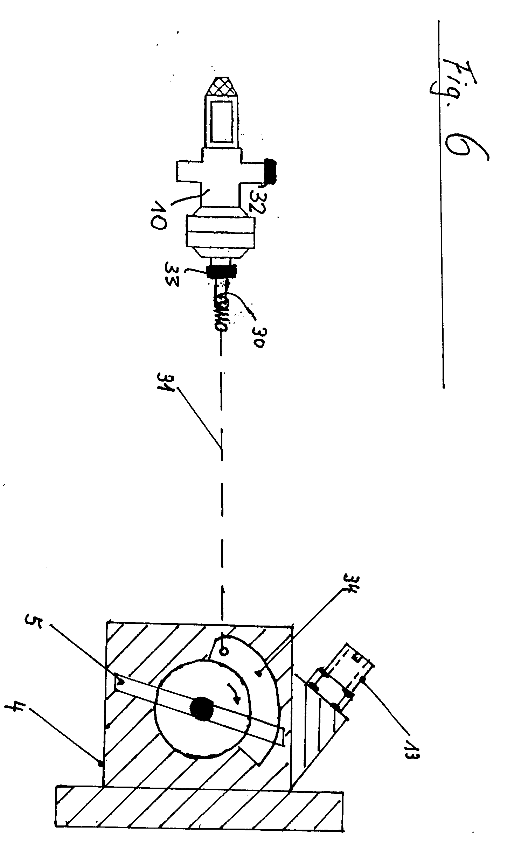

Die Figuren 4 und 5 zeigen weitere Ausführungsformen des in Figur 3 dargestellten Düsenrohres 13, wobei bei der Ausführungsform gemäß Figur 4 der Ventilkörper als Platte 25 ausgebildet ist, die mit einem Ventilsitz 26 zusammenwirkt.

Auch hierbei ist zwischen Ventilsitz 26 und der Platte 25 ein Spalt vorhanden, um das Öffnen des Ventiles zu unterstützen. Schließlich zeigt Figur 5 eine Ausführungsform, bei der der Ventilkörper als Hohlstift ausgebildet ist, der mit der Innenkante eines Ventilsitzes 28 zusammenwirkt.

Die Vorrichtung funktioniert in der folgenden Weise:

Wenn der in Figur 1 rechts dargestellte Zylinder der Brennkraftmaschine ansaugt, würde normalerweise auch Zusatzluft über das Düsenrohr 13 und die zugehörige Leitung 17 angesaugt werden. Da sich jedoch bei dieser Ausführungsform zwei Düsenrohre 13 in einem gemeinsamen Saugrohr befinden und infolge unterschiedlicher Zündfolgen der in Figur 1 gezeigte linke Zylinder beispielsweise nicht gerade dann ansaugt, wenn der rechte Zylinder ansaugt, besteht die Gefahr, daß zwar über das in der Figur rechts dargestellte Düsenrohr 13 Zusatzluft eingesaugt wird, jedoch über die Verlängerung der Leitung 17 durch den Regler 10 hindurch entsprechendes Gemisch aus dem linken Saugrohrteil in den in Figur 1 links dargestellten Leitungsabschnitt 17 gesaugt wird. Dies wird durch das im Düsenrohr 13 angeordnete Rückschlagventil verhindert, das in einem solchen Fall am Ventilsitz 23 anliegt bzw. nahezu anliegt und somit das Düsenrohr sperrt bzw. nahezu sperrt. Wenn der in Figur 1 links dargestellte Zylinder sich danach im Saughub befindet, hebt der Ventilkörper 21 vom Ventilsitz ab, so daß Zusatzluft auf normale Weise eingeführt werden kann. In diesem Stadium sperrt dann das im rechten Düsenrohr 13 angeordnete Rückschlagventil. Durch diese Ventilsperre ist somit ein Gemischaustausch vom ersten zum zweiten Düsenrohr nicht möglich.

In Weiterbildung der Erfindung weist die Vorrichtung einen im vorderen Teil des Auspuffsystems der dazugehörigen Brennkraftmaschine angeordneten Katalysator auf. Durch die Nachschaltung eines derartigen Katalysators ergibt sich insgesamt eine sehr hohe Reduzierung der schädlichen Bestandteile im Abgas, wobei sowohl CO als auch NOₓ und HC reduziert werden. Dieser Effekt wird in Kombination mit dem erfindungsgemäß ausgebildeten Düsenrohr erreicht, wobei sich die eingebaute Ventilsperre hierauf besonders günstig auswirkt.

Die erfindungsgemäße Lösung stellt bei einer weiteren Ausführungsform einen Teil eines Einspritzmotors dar, wobei insbesondere bei Einspritzmotoren ohne Lambdaregelung das Düsenrohr anstelle der Leerlaufeinstellschraube eingesetzt wird. Der Durchsatzregler wird bei dieser Ausführungsform vorzugsweise mechanisch mit der Drosselklappe verbunden.

Figur 6 zeigt in schematischer Darstellung in vergrößerter Ansicht die mechanische Steuerung des Durchsatzreglers 10. Ein stangenförmiges Element 30 erstreckt sich einseitig aus dem Durchsatzregler 10 heraus und steht innerhalb des Reglers direkt mit dem Kolben desselben in Verbindung. Dieses stangenförmige Element 30 erstreckt sich durch das Anschlagelement 12, das in Figur 6 als Einstellschraube 33 dargestellt ist. Das stangenförmige Element 30 ist über einen Verbindungszug 31 mit dem Drosselklappenhebel verbunden, der über das Gasgestänge (nicht gezeigt) vom Gaspedal betätigt wird. Die Verbindung erfolgt dabei über ein an der Drosselklappenwelle angeordnetes Segment 34. Bei 32 ist ein Stopfen in den Durchsatzregler 10 gepreßt. Auf der dem Stopfen gegenüberliegendne Seite des Reglers erfolgt der Anschluß in Richtung Düsenrohr.

Bei der in Figur 6 dargestellten Ausführungsform ist das Düsenrohr 13 anstelle der Leerlaufeinstellschraube angeordnet.

## Patentansprüche

1. Vorrichtung (1) zur Zuführung von Zusatzluft in den gemeinsamen Ansaugkanal (3) von mindestens zwei Zylindern einer Brennkraftmaschine (2) mit mindestens zwei in den gemeinsamen Ansaugkanal (3) mündenden Düsenrohren (13) zur Zuführung der Zusatzluft, einem mit der Atmosphäre in Verbindung stehenden Durchsatzregler (10) für die Zusatzluft, einer Zusatzluftzuführleitung (17) zwischen den Düsenrohren (13) und dem Durchsatzregler (10) und einer Steuereinrichtung (12) für den Durchsatzregler (10), dadurch gekennzeichnet, daß in jedem Düsenrohr (13) ein den Düsenrohrquerschnitt in einer Richtung von der Brennkraftmaschine weg zumindest teilweise sperrendes Rückschlagventil angeordnet ist, das einen sich in Anlage an einem Ventilsitz (23, 26, 28) oder im Abstand davon befindenden federbeaufschlagten Ventilkörper (21, 25, 27) aufweist.

2. Vorrichtung nach Anspruch 1, dadurch gekennzeichnet, daß die Feder (20) des Ventilkörpers (21, 25, 27) bei Anlage desselben am Ventilsitz (23, 26, 28) vollständig entspannt ist.

3. Vorrichtung nach Anspruch 1 oder 2, dadurch gekennzeichnet, daß der Ventilsitz (23, 26, 28) in Axialrichtung des Düsenrohres (13) verstellbar ist.

4. Vorrichtung nach Anspruch 3, dadurch gekennzeichnet, daß ein den Ventilsitz (23, 26, 28) aufweisendes Element (22) in das Düsenrohr (13) eingeschraubt ist.

5. Vorrichtung nach einem der vorangehenden Ansprüche, dadurch gekennzeichnet, daß der Ventilkörper als Kugel (21), Platte (25) oder Stift (27) ausgebildet ist.

6. Vorrichtung nach einem der vorangehenden Ansprüche, dadurch gekennzeichnet, daß der Durchsatzregler (10) mechanisch durch die Drosselklappe (5) gesteuert wird.

7. Vorrichtung nach einem der vorangehenden Ansprüche, dadurch gekennzeichnet, daß sie einen im vorderen Teil des Auspuffsystems der zugehörigen Brennkraftmaschine angeordneten Katalysator aufweist.

8. Vorrichtung nach einem der vorangehenden Ansprüche, dadurch gekennzeichnet, daß sie Teil eines Einspritzmotors ist.

## Claims

1. A device (1) for supplying additional air into the common intake manifold (3) of at least two cylinders of an internal combustion engine (2), said device comprising at least two nozzle tubes (13) for supplying the additional air which open into the common intake manifold (3), a flow rate controller (10) for the additional air which is in communication with the atmosphere, an additional air supply line (17) between the nozzle tubes (13) and the flow rate controller (10), and control means (12) for the flow rate controller (10), characterized in that a non-return valve is disposed in each nozzle tube (13), said non-return valve at least partly blocking the nozzle tube cross-section in a direction away from the internal combustion engine and having a spring-biased valve body (21, 25, 27) engaging a valve seat (23, 26, 28) or spaced therefrom.

2. The device according to claim 1, characterized in that the spring (20) of the valve body (21, 25, 27) is completely released when the valve body (21, 25, 27) engages the valve seat (23, 26, 28).

3. The device according to claim 1 or 2, characterized in that the valve seat (23, 26, 28) is adjustable in the axial direction of the nozzle tube (13).

4. The device according to claim 3, characterized in that a member (22) including the valve seat (23, 26, 28) is screwed into the nozzle tube (13).

5. The device according to one of the preceding claims, characterized in that the valve body is formed as sphere (21), plate (25) or pin (27).

6. The device according to one of the preceding claims, characterized in that the flow rate controller (10) is mechanically controlled by the throttle valve (5).

7. The device according to one of the preceding claims, characterized in that it includes a catalyzer in the forward part of the exhaustion system of the associated internal combustion engine.

8. The device according to one of the preceding claims, characterized in that it is part of an injection engine.

## Revendications

1. Dispositif (1) pour l'amenée d'air d'appoint dans le canal commun d'admission (3) d'au moins deux cylindres d'une machine à combustion interne (2), comportant au moins deux tuyères tubulaires (13) d'amenée de l'air d'appoint qui débouchent dans le canal d'admission commun (3), un régulateur de débit (10) pour l'air d'appoint, en communication avec l'atmosphère, une conduite d'amenée d'air d'appoint (17) située entre les tuyères tubulaires (13) et le régulateur de débit (10), et un dispositif de commande (12) du régulateur de débit (10), caractérisé en ce que dans chaque tuyère tubulaire (13) est disposée une soupape anti-retour fermant au moins partiellement la section transversale de la tuyère tubulaire dans une direction s'éloignant de la machine à combustion interne, et présentant un corps de soupape (21, 25, 27) placé sous la contrainte d'un ressort et posé contre un siège de soupape (23, 26, 28) ou situé à distance de ce dernier.

2. Dispositif selon la revendication 1, caractérisé en ce que le ressort (20) du corps de soupape (21, 25, 27) est complètement détendu lorsque ce dernier repose sur le siège de soupape (23, 26, 28).

3. Dispositif selon les revendications 1 ou 2, caractérisé en ce que le siège de soupape (23, 26, 28) peut être ajusté dans la direction axiale de la tuyère tubulaire (13).

4. Dispositif selon la revendication 3, caractérisé en ce qu'un élément (22) présentant le siège de soupape (23, 26, 28) est vissé dans la tuyère tubulaire (13).

5. Dispositif selon l'une des revendications précédentes, caractérisé en ce que le corps de soupape est configuré comme bille (21), comme plaque (25) ou comme tige (27).

6. Dispositif selon l'une des revendications précédentes, caractérisé en ce que le régulateur de débit (10) est commandé mécaniquement par le clapet d'étranglement (5).

7. Dispositif selon l'une des revendications précédentes, caractérisé en ce qu'il présente un catalyseur disposé dans la partie avant du système d'échappement de la machine à combustion interne associée.

8. Dispositif selon l'une des revendications précédentes, caractérisé en ce qu'il constitue une partie d'un moteur à injection.
